# EUROPÄISCHE PATENTSCHRIFT

(11) **EP 0 696 954 B1**
(45) Veröffentlichungstag und Bekanntmachung des Hinweises auf die Patenterteilung: **05.02.1997**
(21) Anmeldenummer: 94912478.8
(22) Anmeldetag: 19.04.1994
(51) Int. Cl.: B29C 45/56

(54) **VORRICHTUNG ZUR HERSTELLUNG EINES GROSSFLÄCHIGEN KUNSTSTOFFGEGENSTANDES GERINGER WANDDICKE**
DEVICE FOR PRODUCING A LARGE-AREA PLASTIC OBJECT WITH A SMALL WALL THICKNESS
DISPOSITIF PERMETTANT DE REALISER UN OBJET EN PLASTIQUE A GRANDE SURFACE ET A EPAISSEUR DE PAROI REDUITE

(30) Priorität: 21.04.1993 DE 4313015
(43) Veröffentlichungstag der Anmeldung: 21.02.1996
(73) Patentinhaber: MÖBIUS & RUPPERT, D-91056 Erlangen (DE)
(72) Erfinder: FISCHER, Ernst, D-91094 Langensendelbach (DE)
(74) Vertreter: LOUIS, PÖHLAU, LOHRENTZ & SEGETH
(86) Internationale Anmeldenummer: DE9400443
(87) Internationale Veröffentlichungsnummer: WO9423927

(56) Entgegenhaltungen:
- EP-A- 0 403 816
- PATENT ABSTRACTS OF JAPAN vol. 10, no. 273 (M-518)(2329) 17. September 1986 & JP,A,61 095 917 (YUKIAKI SUZUKI) 14. Mai 1986
- PATENT ABSTRACTS OF JAPAN vol. 7, no. 120 (M-217)(1265) 25. Mai 1983 & JP,A,58 039 425 (HASHIMOTO FORMING KOGYO) 8. März 1983
- KUNSTSTOFFE Bd. 80, Nr. 5 , Mai 1990 , MUNCHEN DE Seiten 583 - 587 FRIEDRICHS 'Spritzprägen dünnwandiger thermoplastischer Formteile' in der Anmeldung erwähnt
- PATENT ABSTRACTS OF JAPAN vol. 8, no. 146 (M-307)(1583) 7. Juli 1984 & JP,A,59 042 933 (TOKYO SHIBAURA DENKI) 9. März 1984

## Beschreibung

Die Erfindung betrifft ein Verfahren und eine Vorrichtung zur Herstellung eines großflächigen, Kunststoffgegenstandes geringer Wanddicke, wobei das Kunststoffmaterial im zähflüssigen Zustand durch mindestens einen in einen Formhohlraum einmündenden Einlaß in den dem Kunststoffgegenstand entsprechenden, durch ein Formunterteil und ein Formoberteil festgelegten Formhohlraum eingespritzt wird und Formunter- und Formoberteil nach dem Erstarren des Kunststoffmaterials zum Entnehmen des fertig geformten Kunststoffgegenstandes auseinander bewegt werden, wobei das Formoberteil mit dem Formunterteil während des Einspritzens des zähflüssigen Kunststoffmaterials einen Vorformhohlraum bildet, und unmittelbar nach Abschluß des Einspritzvorgangs Formunterteil und Formoberteil unter Ausbildung des endgültigen Formhohlraumes relativ gegeneinander bewegt werden, so daß sich das zähflüssige Kunststoffmaterial im sich verkleinernden Formhohlraum verteilt.

Ein Verfahren und eine Vorrichtung zur Herstellung eines hochpräzise Oberflächenstrukturen und/oder hochglänzende Flächen aufweisenden Kunststoffgegenstandes ist aus der DE 41 08 236 C1 der Anmelderin bekannt. Diese bekannte Vorrichtung weist einen nicht zu vernachlässigenden maschinellen Aufwand auf, was sich auf die Herstellungskosten der mit dieser Vorrichtung bzw. mit diesem Verfahren hergestellten Kunststoffgegenstände auswirkt. Bei den besagten Kunststoffgegenständen handelt es sich beispielsweise um Fresnellinsen aus einem hochtransparenten Kunststoffmaterial. Als Kunststoffmaterial kommt vorzugsweise PMMA zur Anwendung.

Ein Verfahren und eine Vorrichtung der eingangs genannten Art sind aus der DE-Z:"Kunststoffe", 80 (1990), Heft 5, Seiten 583 bis 587 bekannt. Dort erfolgt die Reduktion des Formhohlraumes vom Vorformhohlraum zum endgültigen, dem herzustellenden Kunststoffgegenstand entsprechenden Formhohlraum durch eine lineare Bewegung der Formteile relativ zueinander derartig, daß sich der Formhohlraum zwischen dem Formoberteil und dem Formunterteil parallel verkleinert. Hierbei wird das in den Vorformhohlraum eingebrachte zähflüssige Kunststoffmaterial vom zentral vorgesehenen Einlaß allseitig, d.h. zur Einspritzrichtung senkrecht in alle Richtungen gleichmäßig verteilt. Hierzu ist ein bestimmter Kraft- und Energieaufwand sowie ein erheblicher maschineller bzw. Vorrichtungsaufwand notwendig.

Der Erfindung liegt die Aufgabe zugrunde, ein Verfahren und eine Vorrichtung der eingangs genannten Art zu schaffen, wobei es mit vergleichsweise geringem maschinellen Aufwand möglich ist, großflächige Kunststoffgegenstände geringer Wanddicke mit guten optischen Eigenschaften preisgünstig herzustellen.

Diese Aufgabe wird verfahrensgemäß in Verbindung mit dem Oberbegriff des Patentanspruchs 1 dadurch gelöst, daß zur Herstellung eines ebenen großflächigen Kunststoffgegenstandes das Kunststoffmaterial durch einen seitlichen Einlaß in einen vom Einlaß ausgehenden sich keilförmig erweiternden Vorformhohlraum eingebracht wird, dessen Keilform zur Ausbildung des endgültigen Formhohlraumes aufgehoben wird. Diese Schließbewegung von Formoberteil und Formunterteil kann also hierbei mit oder zeitlich nach Beginn des Einspritzens stattfinden und mit oder kurz nach Beendigung des Einspritzens beendet sein. Die besten Zeitpunkte für den Beginn und den Abschluß der Schließbewegung sind abhängig vom Fließweg und der Wandstärke des Kunststoffmaterials und können durch Versuche ermittelt werden.

Beim erfindungsgemäßen Verfahren wird das zähflüssige Kunststoffmaterial also in einen im Vergleich zum endgültigen, dem Kunststoffgegenstand formmäßig entsprechenden Formhohlraum größervolumigen, vom Einlaß weg sich keilförmig erweiternden Vorformhohlraum von dem Randbereich her eingebracht, der eine geringe lichte Höhe besitzt, so daß das zähflüssige Kunststoffmaterial vom Einlaß ausgehend problemlos in den Vorformhohlraum hineinfließen kann. Gleichzeitig mit dem Einspritzen des Kunststoffmaterials oder unmittelbar nach Abschluß des Einspritzvorgangs werden das Formoberteil und das Formunterteil relativ gegeneinander derartig bewegt, daß die Keilform des Vorformhohlraumes allmählich aufgehoben, d.h. der Vorformhohlraum in den endgültigen, dem Kunststoffgegenstand entsprechenden Formhohlraum verkleinert, d.h. verändert und gleichzeitig das zähflüssige Kunststoffmaterial im Formhohlraum gleichmäßig verteilt wird. Dadurch können Spannungsschlieren durch Brechungsindexänderung, Interferenzen oder andere optische Inhomogenitäten sowie aus dem Materialgedächtnis resultierende Verwölbungen des großflächigen Kunststoffgegenstandes geringer Wanddicke vermieden werden, was insbesondere bei großflächigen Kunststoffgegenständen z.B. in Form von Linsenrastern oder in Form von Fresnellinsen besonders vorteilhaft ist. Selbstverständlich kann das erfindungsgemäße Verfahren auch zur gleichzeitigen Herstellung einer entsprechenden Anzahl Zeichenlineale, Zeichenschablonen oder dergleichen angewandt werden. Während bei Anwendung an sich üblicher Technologien Kunststoffgegenstände mit einer Grundfläche von größenordnungsmäßig 750 cm² bei einer Mindestwanddicke von 2,2 mm mit einer 250 t-Presse realisierbar sind, was z.B. acht Zeichenlinealen entspricht, sind erfindungsgemäß Kunststoffgegenstände herstellbar, deren Grundfläche bei 31 cm x 31 cm = 960 cm² liegt, wobei eine Wanddicke von größenordungsmäßig 1,4 mm realisierbar ist. Das erfindungsgemäße Verfahren weist aber den erheblichen Vorteil auf, daß der Spritzdruck bzw. der Schließdruck vergleichsweise klein sein kann. Es eignet sich also sehr gut zur Herstellung von Fresnellinsen mit Grundflächenabmessungen von größenordnungsmäßig 31 cm x 31 cm, mit einer Kernwanddicke von größenordungsmäßig 1,9 mm und einer Gesamtwanddicke von größenordungsmäßig 2,25 mm.

Ein einfach durchführbares Verfahren ergibt sich erfindungsgemäß, wenn das Formoberteil und das Formunterteil um eine gemeinsame Formteile-Verbindungsachse zusammengeschwenkt werden, während oder unmittelbar nachdem das zähflüssige Kunststoffmaterial durch den die Lagerachse durchdringenden Einlaß in den sich zum endgültigen Formhohlraum verkleinernden Formhohlraum eingebracht wird.

Die der Erfindung zugrundeliegende Aufgabe wird vorrichtungsgemäß in Verbindung mit dem Oberbegriff des Patentanspruchs 3 dadurch gelöst, daß das Formunterteil und das Formoberteil mittels einer am einspritzseitigen Ende der Formteile vorgesehenen Formteile-Verbindungsachse miteinander schwenkbeweglich verbunden sind, durch welche sich der Einlaß hindurch erstreckt. Durch eine solche Ausbildung der erfindunggemäßen Vorrichtung ergibt sich der Vorteil, daß mit dem Formunterteil und dem Formoberteil ein von der Formteile-Verbindungsachse ausgehender, sich keilförmig erweiternder Vorformhohlraum ausgebildet werden kann, in den durch den sich durch die Formteile-Verbindungsachse hindurch erstreckenden Einlaß ein geeignetes zähflüssiges Kunststoffmaterial einbringbar ist. Gleichzeitig mit dem Einbringen des zähflüssigen Kunststoffmaterials bzw. unmittelbar nach Abschluß des Einbringens desselben werden Formunterteil und Formoberteil um die gemeinsame Formteile-Verbindungsachse herum zusammengeschwenkt, wobei der keilförmige Vorformhohlraum in den endgültigen Formhohlraum umgewandelt und gleichzeitig das in den Vorformhohlraum eingebrachte zähflüssige Kunststoffmaterial im Formhohlraum gleichmäßig verteilt wird. Dabei wird durch den keilförmig erweiterten Vorformhohlraum das Einbringen des zähflüssigen Kunststoffmaterials in den Vorformhohlraum und außerdem die gleichmäßige Verteilung des zähflüssigen Kunststoffmaterials beim Zusammenschwenken der beiden Formteile erleichtert bzw. optimiert, so daß es möglich ist, großflächige Kunststoffgegenstände z.B. mit einer hochpräzisen Oberflächenstruktur und/oder mit einer hochglänzenden Oberfläche und mit ausgezeichneten optischen Eigenschaften herzustellen, weil Spannungsschlieren durch Brechungsindexänderungen, Interferenzen oder andere optische Inhomogenitäten auf relativ einfache Weise verhindert werden. Ein weiterer Vorteil besteht darin, daß der Preßdruck vergleichsweise klein sein kann, was bedeuted, daß es auch mit relativ kleinen Pressen möglich ist, großflächige Kunststoffgegenstände geringer Wanddicke zu realisieren.

Als zweckmäßig hat es sich erwiesen, wenn das Formunterteil an einem Basisteil und das Formoberteil mittels einer Gelenkverbindungseinrichtung an einem Montageteil befestigt ist, das in Bezug auf das Basisteil linear höhenverstellbar ist. Zu diesem Zweck können am Basisteil Säulen vorgesehen sein, entlang welchen das Montageteil höhenverstellbar ist. Das Basisteil mit den Säulen und das entlang den Säulen höhenverstellbar vorgesehene Montageteil können Teile einer an sich bekannten Presse sein, so daß der Investitionsaufwand für eine erfindungsgemäße Vorrichtung vergleichsweise klein ist.

Die Gelenkeinrichtung weist vorzugsweise ein am Formoberteil befestigbares bzw. befestigtes erstes Befestigungsteil, ein am Montageteil befestigbares bzw. befestigtes zweites Befestigungsteil und zwischen dem ersten und dem zweiten Befestigungsteil ein Zwischenteil auf, das mit dem ersten Befestigungsteil mittels einer ersten Schwenkachse und mit dem zweiten Befestigungteil mittels einer zweiten Schwenkachse schwenkbeweglich verbunden ist, wobei die erste und die zweite Schwenkachse zueinander und zur Formteile-Verbindungsachse parallel orientiert sind. Durch eine solche Ausbildung der erfindungsgemäßen Vorrichtung ergibt sich der Vorteil, daß eine lineare Bewegung des Montageteils in Bezug auf das Basisteil eine entsprechende Verschwenkung des Formoberteils um die Formteile-Verbindungsachse in Bezug auf das Formunterteil bewirkt, wobei die Druckkraft des Montageteils auf das Formoberteil übertragen wird. Nachdem die besagte Druckkraft relativ groß ist, d.h. in der Größenordnung von beispielsweise 250 Tonnen liegen kann, ist es vorteilhaft, wenn die erste Schwenkachse mit dem ersten Befestigungsteil und mit dem Zwischenteil in größflächigem Berührungskontakt ist, wenn die zweite Schwenkachse mit dem zweiten Befestigungsteil und mit dem Zwischenteil in großflächigem Berührungskontakt ist, und wenn die Formteile-Verbindungsachse mit dem Formoberteil und mit dem Formunterteil in großflächigem Berührungskontakt ist.

Ein sehr gleichmäßiger Eintrag des zähflüssigen Kunststoffmaterials in den keilförmig erweiterten Vorformhohlraum ist möglich, wenn der in der Formteile-Verbindungsachse vorgesehene Einlaß auf der dem Formhohlraum zugewandten Seite mit einem sich fächerförmig erweiternden Spaltkanal und an der vom Spaltkanal abgewandten Seite mit einem Zentrierabschnitt für eine Spritzdüse ausgebildet ist. Der in der Formteile-Verbindungsachse ausgebildete Einlaß bzw. der vorderseitige sich fächerförmig erweiternde Spaltkanal ist bei der erfindungsgemäßen Vorrichtung zweckmäßigerweise derartig vorgesehen, daß im geschlossenen Zustand der Form der Einlaß durch das Formoberteil verschlossen ist, so daß eine Rückströmung von Kunststoffmaterial in den Einlaß ausgeschlossen ist. Im geschlossenen Zustand der Form ist der Formhohlraum also allseitig dicht verschlossen. Diesem Zweck ist es dienlich, wenn das Formunterteil oder das Formoberteil mit einem den Formhohlraum an drei Seiten begrenzenden Kragen ausgebildet und die Formteil-Verbindungsachse an der vierten Seite des Formhohlraumes vorgesehen ist. Als vorteilhaft hat es sich erwiesen, wenn das Formunterteil und/oder das Formoberteil mit einer Heizungs- bzw. Temperiereinrichtung und/oder mit einer Kühleinrichtung ausgebildet ist. Mit Hilfe der Heizungs- bzw. Temperiereinrichtung ist es möglich, die Werkzeugtemperatur optimal zu regeln um einwandfreie Teile herstellen zu können. Durch die besondere Art der Formfüllung, über einen schirmartigen Ausguß, zusammen mit der besonderen Schließbewegung des keilförmig geöffneten Werkzeuges, ergibt sich eine lineare Füllung des Werkzeuges mit einer geraden Fließfront, was zu besonders spannungsarmen, wenig verzugsempfindlichen Teilen führt.

Ein Ausführungsbeispiel der Erfindung ist in der Zeichnung dargestellt und wird nachfolgend beschrieben. Es zeigen:
- Fig. 1: eine teileweise aufgeschnittene Vorderansicht der Vorrichtung im geöffneten Zustand,
- Fig. 2: eine der Fig. 1 ähnliche Darstellung der Vorrichtung in einer teilgeschlossenen Stellung von Formunterteil und Formoberteil zur Ausbildung eines Vorformhohlraumes, vor Beginn des Einspritzvorganges,
- Fig. 3: eine teilweise aufgeschnittene Funktionsdarstellung von drei aufeinanderfolgenden, keilförmig erweiterten Zwischenstellungen von 1°, 0,5°, 0,2° und 0° sowie die Fließfront und der sich daran zeitlich anschließenden Verschlußstellung des Formoberteils relativ zum ortsfest vorgesehenen Unterteil,
- Fig. 4: eine den Fig. 1 und 2 ähnlich Darstellung der Vorrichtung in der geschlossen Arbeitsstellung, in welcher das Formoberteil und das Formunterteil den allseitig abgeschlossenen, dem herzustellenden großflächigen Kunststoffgegenstand geringer Wanddicke entsprechenden Formhohlraum festlegen,
- Fig. 5: eine teilweise aufgeschnittene Ansicht des Formunterteils und der Formteile-Verbindungsachse in Blickrichtung von oben, und
- Fig. 6: eine teilweise aufgeschnittene Ansicht des Formoberteils und des Formunterteils im geschlossenen Zustand in Blickrichtung von der Einspritzseite.

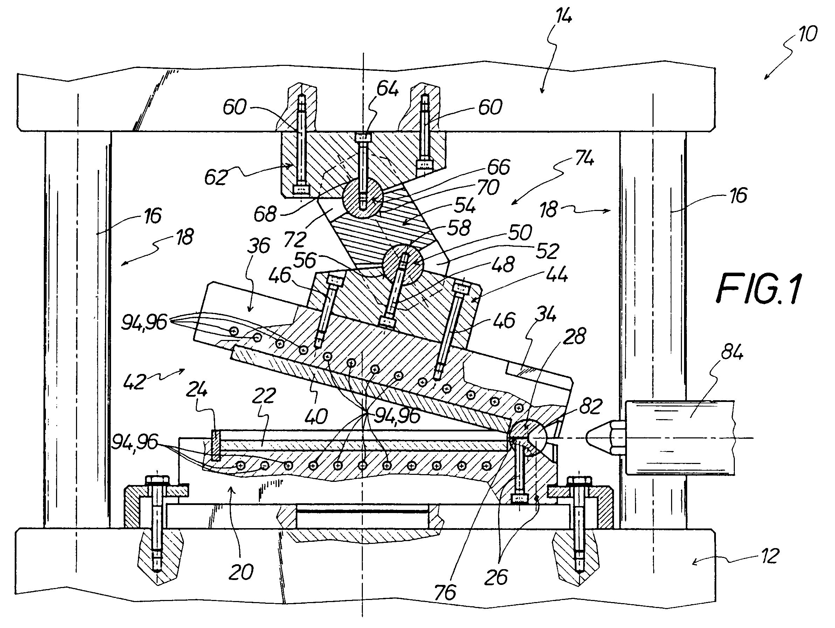

Fig. 1 zeigt eine Vorrichtung 10 mit einem abschnittweise gezeichneten Basisteil 12 und mit einem abschnittweise gezeichneten Montageteil 14, das entlang Säulen 16 einer Säulenführung 18 in Bezug auf das Basisteil 12 beweglich ist.

Am Basisteil 12 ist ein Formunterteil 20 befestigt. Das Formunterteil 20 weist ein Einsatzteil 22 und einen das Einsatzteil 22 an drei Seiten begrenzenden Kragen 24 auf. Der Kragen 24 steht über das Einsatzteil 22 bzw. über das Formunterteil 20 über.

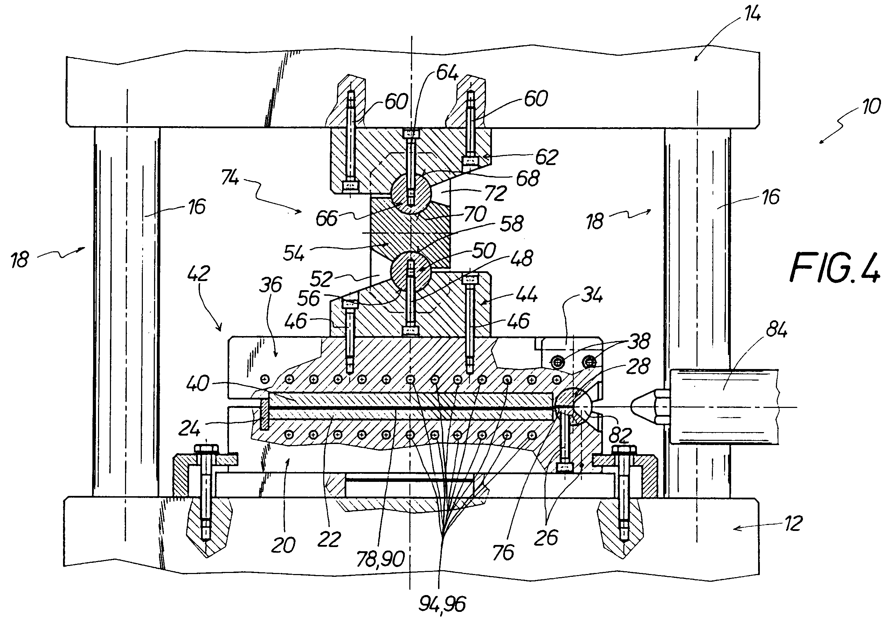

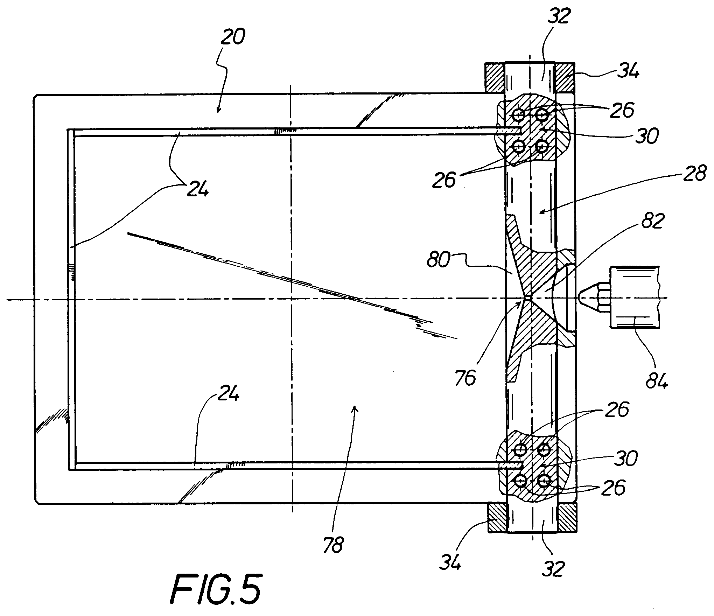

Am Formunterteil 20 ist mittels Befestigungselementen 26 eine Formteile-Verbindungsachse 28 befestigt. In Fig. 1 ist nur ein Befestigungselement 26 gezeichnet, von einem zweiten Befestigungselement 26 ist in dieser Zeichnungsfigur nur die Mittellinie gezeichnet. Aus Fig. 5 ist ersichtlich, daß die Formteile-Verbindungsachse 28 an ihren beiden voneinander abgewandten Endabschnitten 30 jeweils mit vier Befestigungselementen 26 am Formunterteil 20 befestigt ist. Die beiden Endabschnitte 30 der Formteile-Verbindungsachse 28 stehen über das Formunterteil 20 mit Achsstummeln 32 über, die in Scharnierorganen 34 gelagert sind, die an einem Formoberteil 36 mittels Befestigungselementen 38 befestigt sind, von welchen in Fig. 4 zwei Befestigungselemente 38 sichtbar sind.

Das mit einer Matrize 40 versehene Formoberteil 36 ist also mittels der Formteile-Verbindungsachse 28 mit dem Formunterteil 20 schwenkbeweglich verbunden, wobei in Fig. 1 eine geöffnete Stellung der Vorrichtung 10 dargestellt ist. In dieser geöffneten Stellung ist es möglich, einen fertig geformten Kunststoffgegenstand aus der Vorrichtung 10 bzw. aus der aus Formunterteil 20 und Formoberteil 36 bestehenden Form 42 zu entnehmen.

Am Formoberteil 36 ist ein erstes Befestigungsteil 44 mittels Befestigungselementen 46 befestigt. Am ersten Befestigungsteil 44 ist mittels Befestigungselementen 48 eine erste Schwenkachse 50 befestigt, die mit ihren beiden voneinander abgewandten Endabschnitten über das erste Befestigungsteil 44 übersteht. Die besagten überstehenden Endabschnitte der ersten Schwenkachse 50 sind in Laschen 52 gelagert, die seitlich vom Zwischenteil 54 nach unten stehen. Das erste Befestigungsteil 44 ist mit einer an die erste Schwenkachse 50 angepassten teilzylinderischen Gleit- bzw. Berührungsfläche 56 ausgebildet. Das Zwischenteil 54 ist mit einer ähnlichen an die erste Schwenkachse 50 formmäßig angepaßten teilzylindrischen Gleit- bzw. Berührungsfläche 58 ausgebildet, so daß sich zwischen dem Zwischenteil 54, der ersten Schwenkachse 50 und dem ersten Befestigungsteil 44 jeweils ein großflächiger Berührungskontakt ergibt.

Am Montageteil 14 der Vorrichtung 10 ist mittels Befestigungselementen 60 ein zweites Befestungsteil 62 befestigt. Am zweiten Befestigungsteil 62 ist mittels Befestigungselement 64 eine zweite Schwenkachse 66 befestigt. Das zweite Befestigungsteil 62 ist mit einer an die zweite Schwenkachse 66 formmäßig angepaßten teilzylinderischen Berührungsfläche 68 und das Zwischenteil 54 ist mit einer an die zweite Schwenkachse 66 formmäßig angepaßten teilzylinderischen Gleit- bzw. Berührungsfläche 70 ausgebildet. Die zweite Schwenkachse 66 steht - wie die erste Schwenkachse 50 - mit ihren beiden voneinander abgewandten Endabschnitten über das zweite Befestigungsteil 62 über. Die besagten beiden überstehenden Endabschnitte der zweiten Schwenkachse 66 sind in Laschen 72 gelagert, die vom Zwischenteil 54 seitlich nach oben stehen.

Das erste und das zweite Befestigungsteil 44 und 62 und das Zwischenteil 54 bilden somit gemeinsam mit den beiden Schwenkachsen 50 und 66 eine Gelenkverbindungseinrichtung 74, wobei dadurch, daß die beiden Schwenkachsen 50 und 66 zueinander und zur Formteile-Verbindungsachse 28 parallel orientiert sind, eine auf- und abgehende Bewegung des Montageteiles 14 relativ zum Basisteil 12 eine Öffnungs- bzw. Verschlußbewegung des Formoberteils 36 in Bezug auf das Formunterteil 20 bewirkt.

Das Einsatzteil 22 und/oder die Matrize 40 können mit einer Struktur ausgebildet sein, um mit der Vorrichtung 10 einen entsprechend strukturierten ebenen Kunststoffgegenstand großer Grundflächenabmessungen und vergleichsweise geringer Wanddicke herzustellen.

Durch die Formteile-Verbindungsachse 28 erstreckt sich ein Einlaß 76 hindurch, der - wie insbes. aus Fig. 5 ersichtlich ist - auf der dem Formhohlraum 78 zugewandten Seite mit einem fächerförmig erweiterten Spaltkanal 80 ausgebildet sein kann. Auf der vom Spaltkanal 80 abgewandten Seite ist der Einlaß 76 zweckmäßigerweise mit einen Zentrierabschnitt 82 ausgebildet, der zur Zentrierung einer abschnittweise gezeichneten Kunststoff-Spritzdüse 84 dient. Der in der Formteile-Verbindungsachse 28 ausgebildete Zentrierabschnitt 82 des Einlasses 76 mündet im Hohlraum der vom Formunterteil 20 und Formoberteil 36 der Form 42 begrenzt wird.

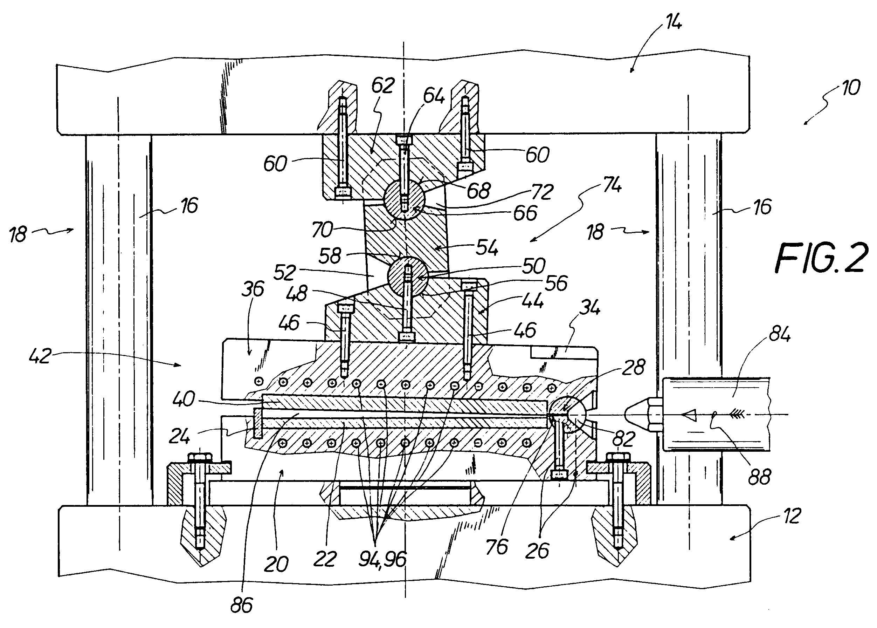

Das Formoberteil 36 mit der Matrize 40 ist in der Nachbarschaft der Formteile-Verbindungsachse 28 derartig gestaltet, daß der Einlaß 76 in der in Fig. 1 gezeichneten geöffneten Stellung der Form 42 und in der in Fig. 2 gezeichneten Stellung der Form 42, in der zwischen der Matrize 40 und dem Einsatzteil 22 ein Vorformhohlraum 86 festgelegt wird, nicht verschlossen ist, während der Einlaß 76 in der in Fig. 4 gezeichneten Arbeitsstellung der Form 42, in welcher in der Form der dem herzustellenden Kunststoffgegenstand entsprechende Formhohlraum 78 festgelegt ist, abgedichtet ist.

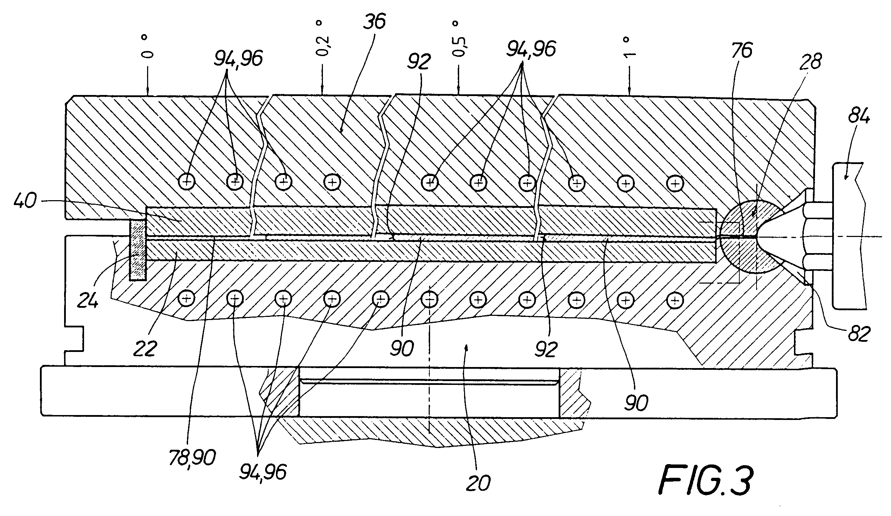

Aus Fig. 2, in der gleiche Einzelheiten mit denselben Bezugsziffern bezeichnet sind wie in Fig. 1, ist der vom Einlaß 76 ausgehend keilförmig sich erweiternde Vorformhohlraum 86 zu erkennen, der unterseitig durch das Einsatzteil 22, oberseitig durch die Matrize 40 und an drei Seiten seines Umfangsrandes durch den Kragen 24 begrenzt ist. Auf der vierten Seite ist der Vorformhohlraum 86 durch das Formoberteil 36 bzw. durch die Formteile-Verbindungsachse 28 mit ihrem Einlaß 76 begrenzt. In der in Fig. 2 gezeichneten Arbeitsstellung der Form 42 wird der Spritzkopf 84 in den Zentrierabschnitt 82 der Formteile-Verbindungsachse 28 hineinbewegt, was in Fig. 2 durch den Pfeil 88 angedeutet ist. Dann wird durch den Einlaß 76 in den keilförmig erweiterten Vorformhohlraum 86 zähflüssiges Kunststoffmaterial eingespritzt und gleichzeitig oder unmittelbar danach mit Hilfe des Montageteiles 14 über die Gelenkverbindungseinrichtung 74 das Formoberteil 36 um die Formteile-Verbindungsachse 28 im entgegengesetzten Uhrzeigersinn verschwenkt, so daß die Keilform des Vorformhohlraums 86 entsprechend verkleinert und gleichzeitig das durch den Einlaß 76 in den Vorformhohlraum 86 eingebrachte zähflüssige Kunststoffmaterial vom Bereich des Einlasses 76 weg in den Formhohlraum hinein gleichmäßig verteilt wird. Das ist in Fig. 3 schematisch verdeutlicht, wo drei nacheinander kleiner werdende keilförmige Vorformhohlraum-Zwischenstellungen und die geschlossene Endstellung angedeutet sind. Bei den Vorformhohlraum-Zwischenstellungen beträgt der Keilwinkel 1°, 0,5° bzw. 0,2°. Mit 0° ist die Endstellung bezeichnet, in welcher zwischen der Matrize 40 und dem Einsatzteil 22 der mit Kunststoffmaterial 90 vollständig ausgefüllte Formhohlraum 78 gebildet ist. Mit kleiner werdendem Keilwinkel wird also das Kunststoffmaterial 90, d.h. sein vom Einlaß 76 entfernter Vorderrand 92 immer weiter vom Einlaß 76 weg in den entsprechendem Vorformhohlraum 86 hineingezwängt, bis das Kunststoffmaterial 90 letztendlich den gesamten endgültigen Formhohlraum 78 ausfüllt. Das ist auch in Fig. 4 zeichnerisch dargestellt. Aus den Figuren 3 und 4 ist auch ersichtlich, daß im geschlossenen Zustand der Form 42 der sich durch die Formteile-Verbindungsachse 28 hindurch erstreckende Einlaß 76 durch das Formoberteil 36 dicht verschlossen ist, so daß eine ungewollte Rückströmung von Kunststoffmaterial vom Formhohlraum 78 in den Einlaß 76 hinein ausgeschlossen ist.

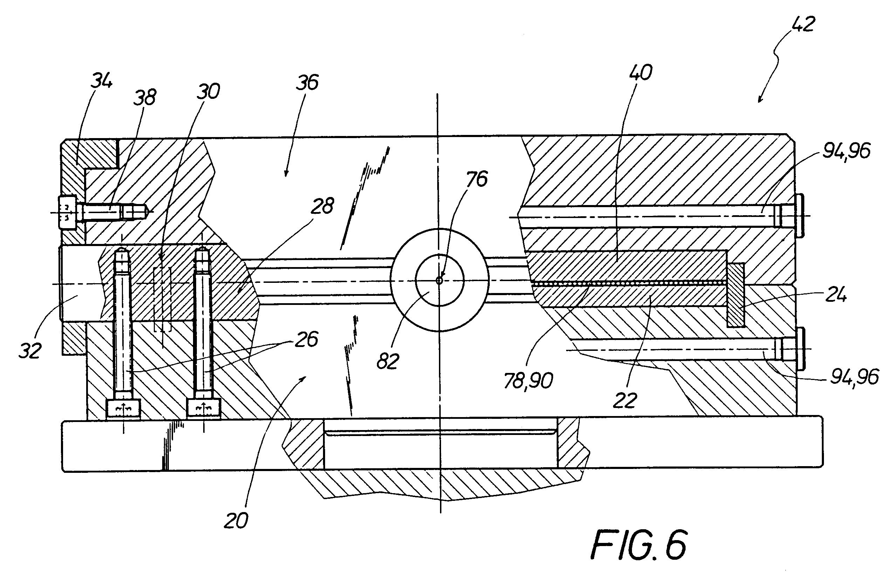

Das Formunterteil 20 und/oder das Formoberteil 36 sind zweckmäßigerweise mit einer Heizungs- bzw. Temperiereinrichtung 94 und/oder mit einer Kühleinrichtung 96 ausgebildet, wie auch aus Fig. 6 deutlich zu erkennen ist.

## Patentansprüche

1. Verfahren zur Herstellung eines großflächigen Kunststoffgegenstandes geringer Wanddicke, wobei das Kunststoffmaterial (90) im zähflüssigem Zustand durch mindestens einen in einen Formhohlraum (78) einmündenden Einlaß (76) in den dem Kunststoffgegenstand entsprechenden, durch ein Formunterteil (20) und ein Formoberteil (36) festgelegten Formhohlraum (78) eingespritzt wird und Formunter- und Formoberteil (20, 36) nach dem Erstarren des Kunststoffmaterials (90) zum Entnehmen des fertig geformten Kunststoffgegenstandes auseinander bewegt werden, wobei das Formoberteil (36) mit dem Formunterteil (20) während des Einspritzens des zähflüssigen Kunststoffmaterials (90) einen Vorformhohlraum (86) bildet, und unmittelbar nach Abschluß des Einspritzvorgangs Formunterteil (20) und Formoberteil (36) unter Ausbildung des endgültigen Formhohlraumes (78) relativ gegeneinander bewegt werden, so daß sich das zähflüssige Kunststoffmaterial (90) im sich verkleinernden Formhohlraum (78) verteilt,
**dadurch gekennzeichnet**,
daß zur Herstellung eines ebenen großflächigen Kunststoffgegenstandes das Kunststoffmaterial (90) durch einen seitlichen Einlaß (76) in einen vom Einlaß (76) ausgehend keilförmig erweiterten Vorformhohlraum (86) eingebracht wird, dessen Keilform zur Ausbildung des endgültigen Formhohlraumes (78) aufgehoben wird.

2. Verfahren nach Anspruch 1,
**dadurch gekennzeichnet,**
daß das Formunter- und Formoberteil (20, 36) um eine gemeinsame Formteile-Verbindungsachse (28) zusammengeschwenkt werden, während oder unmittelbar nach dem das zähflüssige Kunststoffmaterial (90) durch den die Formteile-Verbindungsachse (28) durchdringenden Einlaß (76) in den sich zum endgültigen Formhohlraum (78) verkleinernden Formhohlraum eingebracht wird.

3. Vorrichtung zur Herstellung eines großflächigen Kunststoffgegenstandes geringer Wanddicke mit einem Formunterteil (20) und einem Formoberteil (36), die einen dem Kunststoffgegenstand entsprechenden Formhohlraum (78) festlegen, in welchen seitlich ein Einlaß (76) für zähflüssiges Kunststoffmaterial einmündet,
**dadurch gekennzeichnet,**
daß das Formunterteil (20) und das Formoberteil (36) mittels einer am einspritzseitigen Ende der Formteile (20, 36) vorgesehenen Formteile-Verbindungsachse (28) miteinander schwenkbeweglich verbunden sind, durch welche sich der Einlaß (76) hindurcherstreckt.

4. Vorrichtung nach Anspruch 3,
**dadurch gekennzeichnet,**
daß das Formunterteil (20) an einem Basisteil (12) und das Formoberteil (36) mittels einer Gelenkverbindungseinrichtung (74) an einem Montageteil (14) befestigt ist, das in Bezug auf das Basisteil (12) linear beweglich ist.

5. Vorrichtung nach Anspruch 4,
**dadurch gekennzeichnet,**
daß am Basisteil (12) Säulen (16) vorgesehen sind, entlang welchen das Montageteil (14) höhenverstellbar ist.

6. Vorrichtung nach Anspruch 3 und 4,
**dadurch gekennzeichnet,**
daß die Gelenkverbindungseinrichtung (74) ein am Formoberteil (36) befestigbares bzw. befestigtes erstes Befestigungsteil (44), ein am Montageteil (14) befestigbares bzw. befestigtes zweites Befestigungsteil (62) und zwischen dem ersten und dem zweiten Befestigungsteil (44, 62) ein Zwischenteil (54) aufweist, das mit dem ersten Befestigungsteil (44) mittels einer ersten Schwenkachse (50) und mit dem zweiten Befestigungsteil (62) mittels einer zweiten Schwenkachse (66) schwenkbeweglich verbunden ist, wobei die erste und die zweite Schwenkachse (50, 66) zueinander und zur Formteile-Verbindungsachse (28) parallel orientiert sind.

7. Vorrichtung nach Anspruch 6,
**dadurch gekennzeichnet,**
daß die erste Schwenkachse (50) mit dem ersten Befestigungsteil (44) und mit dem Zwischenteil (54) in großflächigem Berührungskontakt (bei 56, 58) ist, daß die zweite Schwenkachse (66) mit dem zweiten Befestigungsteil (62) und mit dem Zwischenteil (54) in großflächigem Berührungskontakt (bei 68, 70) ist, und daß die Formteile-Verbindungsachse (28) mit dem Formoberteil (36) und mit dem Formunterteil (20) in großflächigem Berührungskontakt ist.

8. Vorrichtung nach einem der Ansprüche 3 bis 7 ,
**dadurch gekennzeichnet,**
daß der in der Formteile-Verbindungsachse (28) vorgesehene Einlaß (76) auf der dem Formhohlraum zugewandten Seite mit einem sich fächerförmig erweiternden Spaltkanal (80) und an der vom Spaltkanal (80) abgewandten Seite mit einem Zentrierabschnitt (82) für einen Spritzkopf (84) ausgebildet ist.

9. Vorrichtung nach einem der Ansprüche 3 bis 8,
**dadurch gekennzeichnet,**
daß das Formunterteil (20) oder das Formoberteil (36) mit einem den Formhohlraum an drei Seiten begrenzenden Kragen (24) ausgebildet und die Formteile-Verbindungsachse (28) an der vierten Seite des Formhohlraumes vorgesehen ist.

10. Vorrichtung nach einem dar Ansprüche 3 bis 9,
**dadurch gekennzeichnet,**
daß das Formunterteil (20) und/oder das Formoberteil (36) mit einer Heizungs- bzw. Tempereinrichtung (94) und/oder mit einer Kühleinrichtung (96) ausgebildet ist.

11. Vorrichtung nach einem der vorhergehenden Ansprüche,
**dadurch gekennzeichnet,**
daß der Einlaß (76) an der schmalsten Stelle des im Einspritzzustand keilförmigen Vorformhohlraums (86) vorgesehen ist.

12. Vorrichtung nach einem der vorhergehenden Ansprüche,
**dadurch gekennzeichnet,**
daß ein, zwei oder mehrere Einlasse (76) entlang der Formteile-Verbindungsachse vorgesehen sind.

13. Vorrichtung nach einem der vorhergehenden Ansprüche,
**dadurch gekennzeichnet,**
daß entlang der Längsachse der Formteile-Verbindungsachse ein Heißkanalsystem vorgesehen ist, durch daß an mehreren Stellen thermoplastisches Material in den keilförmigen Formhohlraum gespritzt wird.

## Claims

1. Process for producing a large-area plastic object with a small wall thickness, the plastic material (90) being injected in the viscous state through at least one inlet (76), opening into a mould cavity (78), into the mould cavity (78) which corresponds to the plastic object and which is defined by a lower mould part (20) and an upper mould part (36), and the lower and upper mould parts (20, 36) being moved apart after solidification of the plastic material (90) for the purpose of removing the ready-moulded plastic object, the upper mould part (36) forming a preliminary mould cavity (86) with the lower mould part (20) during injection of the viscous plastic material (90), and lower mould part (20) and upper mould part (36) being moved relative to one another immediately after the end of the injection operation so as to form the final mould cavity (78), so that the viscous plastic material (90) is distributed within the mould cavity (78) as the latter becomes smaller, characterized in that in order to produce a flat, large-area plastic object the plastic material (90) is introduced through a lateral inlet (76) into a preliminary mould cavity (86) which widens in a wedge shape starting from the inlet (76), the wedge shape of which preliminary mould cavity is eliminated in order to form the final mould cavity (78).

2. Process according to Claim 1, characterized in that the lower and upper mould parts (20, 36) are pivoted together about a common mould-part connection pin (28), during or immediately after the introduction of the viscous plastic material (90) through the inlet (76) penetrating the mould-part connection pin (28) into the mould cavity, which becomes smaller so as to form the final mould cavity (78).

3. Device for producing a large-area plastic object with a small wall thickness, having a lower mould part (20) and an upper mould part (36) which define a mould cavity (78) corresponding to the plastic object, into which cavity an inlet (76) for viscous plastic material opens laterally, characterized in that the lower mould part (20) and the upper mould part (36) are connected to one another so as to be pivotably movable by means of a mould-part connection pin (28) which is provided at the injection end of the mould part (20, 36) and through which the inlet (76) extends.

4. Device according to Claim 3, characterized in that the lower mould part (20) is fastened on a base part (12) and the upper mould part (36) is fastened on a mounting part (14), which is linearly movable with respect to the base part (12), by means of an articulation device (74).

5. Device according to Claim 4, characterized in that columns (16), along which the mounting part (14) is vertically adjustable, are provided on the base part (12).

6. Device according to Claims 3 and 4, characterized in that the articulation device (74) has a first fastening part (44) which can be or is fastened on the upper mould part (36), a second fastening part (62) which can be or is fastened on the mounting part (14), and an intermediate part (54) between the first and second fastening parts (44, 62), which intermediate part is connected to the first fastening part (44) by means of a first pivot pin (50) and to the second fastening part (62) by means of a second pivot pin (66) so as to be pivotably movable, the first and the second pivot pins (50, 66) being oriented parallel to one another and to the mould-part connection pin (28).

7. Device according to Claim 6, characterized in that the first pivot pin (50) is in touching contact over a large area (at 56, 58) with the first fastening part (44) and with the intermediate part (54); in that the second pivot pin (66) is in touching contact over a large area (at 68, 70) with the second fastening part (62) and with the intermediate part (54); and in that the mould-part connection pin (28) is in touching contact over a large area with the upper mould part (36) and with the lower mould part (20).

8. Device according to one of Claims 3 to 7, characterized in that the inlet (76) provided in the mould-part connection pin (28) is designed on the side facing the mould cavity with a channel gap (80), which grows larger in a fan-shaped manner, and on the side remote from the channel gap (80) is designed with a centring portion (82) for an injection-moulding head (84).

9. Device according to one of Claims 3 to 8, characterized in that the lower mould part (20) or the upper mould part (36) is designed with a collar (24) delimiting the mould cavity on three sides and the mould-part connection pin (28) is provided on the fourth side of the mould cavity.

10. Device according to one of Claims 3 to 9, characterized in that the lower mould part (20) and/or the upper mould part (36) is designed with a heating or tempering device (94) and/or with a cooling device (96).

11. Device according to one of the preceding claims, characterized in that the inlet (76) is provided at the narrowest point of the preliminary mould cavity (86) which is wedge-shaped in the injection state.

12. Device according to one of the preceding claims, characterized in that one, two, or more inlets (76) are provided along the mould-part connection pin.

13. Device according to one of the preceding claims, characterized in that a hot runner system is provided along the longitudinal axis of the mould-part connection pin, through which thermoplastic material is injected into the wedge-shaped mould cavity at a number of locations.

## Revendications

1. Procédé pour la réalisation d'un objet en matière plastique à grande surface et à épaisseur de paroi réduite, dans lequel la matière plastique (90) est injectée à l'état de liquide visqueux par au moins un orifice d'admission (76) débouchant dans un espace de moulage creux (78) dans lequel sont fixés un élément de moule inférieur (20) et un élément de moule supérieur (36) correspondant à l'objet en matière plastique, et les éléments du moule inférieur et supérieur (20, 36), après solidification de la matière plastique (90) sont écartés l'un de l'autre pour l'extraction de l'objet en matière plastique moulé terminé, et dans lequel l'élément de moule supérieur (36) forme, avec l'élément de moule inférieur (20) un espace creux de prémoulage (86) au cours de l'injection de la matière plastique à l'état de liquide visqueux, et directement après la fin du processus d'injection, l'élément de moule inférieur (20) et l'élément de moule supérieur (36) sont rapprochés l'un de l'autre pour former l'espace de moulage creux (78) final, de telle sorte que la matière pastique (90) visqueuse se répartit dans un espace de moulage creux (78) réduit,
caractérisé en ce que
en vue de l'obtention d'un objet en matière plastique à grande surface lisse, la matière plastique (90) est introduite par un orifice d'admission latéral (76) dans un espace de prémoulage creux (86) en forme de coin s'ouvrant à partir de l'orifice d'admission (76), dont la forme de coin est soulevée en vue de la formation de l'espace de moulage creux (78).

2. Procédé selon la revendication 1, caractérisé en ce que les éléments du moule inférieur et supérieur (20, 36) basculent l'un par rapport à l'autre autour d'un axe de liaison commun des éléments de moule (28) pendant, ou directement après que la matière plastique à l'état de liquide visqueux (90) ait été introduite par l'orifice d'admission (76) traversant l'axe de liaison des éléments de moule (28) dans l'espace de moulage creux réduit en espace de moulage creux final (78).

3. Appareillage pour l'obtention d'un objet en matière plastique à grande surface et à épaisseur de paroi réduite comportant un élément de moule inférieur (20) et un élément de moule supérieur (36) constituant un espace de moulage creux (78) correspondant à l'objet en matière plastique, dans lequel débouche latéralement un orifice d'admission (76) pour la matière plastique à l'état de liquide visqueux,
caractérisé en ce que
l'élément de moule inférieur (20) et l'élément de moule supérieur (36) sont réunis l'un à l'autre mobiles en basculement au moyen d'un axe de liaison des éléments de moule (28) situé à l'extrémité d'injection des éléments de moule (20, 36) à travers laquelle passe l'orifice d'admission (76).

4. Appareillage selon la revendication 3, caractérisé en ce que l'élément de moule inférieur (20) est fixé à un élément de base (12) et l'élément de moule supérieur (36) est fixé par un dispositif de liaison par bielles (74) à un élément de montage (14) qui est mobile linéairement par rapport à l'élément de base (12).

5. Appareillage selon la revendication 4, caractérisé en ce que, à l'élément de base (12) sont fixées des colonnes (16) le long desquelles l'élément de montage (14) peut coulisser en hauteur.

6. Appareillage selon les revendications 3 et 4, caractérisé en ce que le dispositif de liaison par belles (74) comprend un premier élément de fixation (44) qui est, ou peut être fixé à l'élément de moule supérieur (36), un second élément de fixation (62) qui est, ou peut être fixé à l'élément de montage (14) et, entre les deux éléments de fixation (44, 62), un élément intermédiaire (54) qui est relié de façon mobile basculante au premier élément de fixation (44) par l'intermédiaire d'un premier axe de basculement (50) et au second élément de fixation (62) par l'intermédiaire d'un second axe de basculement (66), le premier et le second axes de fixations (50, 66) étant orientés parallèlement l'un à l'autre et à l'axe de liaison des éléments de moule (28).

7. Appareillage selon la revendication 6, caractérisé en ce que le premier axe de basculement (50) est en contact surfacique élevé (par 56, 58) avec le premier élément de fixation (44) et l'élément intermédiaire (54), le second axe de basculement (66) est en contact surfacique élevé (par 68, 70) avec le second élément de fixation (62) et l'élément intermédiaire (54) et l'axe de liaison des éléments de moule (28) est en contact surfacique élevé avec l'élément de moule supérieur (36) et l'élément de moule inférieur (20).

8. Appareillage selon l'une quelconque des revendications 3 à 7, caractérisé en ce que l'orifice d'admission (76) prévu dans l'axe de liaison des éléments de moule (28) comporte un canal en forme de fente s'élargissant en éventail (80) sur le côté orienté vers l'espace de moulage creux et une section centrale (82) sur le côté orienté dans la direction opposée au canal en forme de fente (80) pour une tête d'injection (84).

9. Appareillage selon l'une quelconque des revendications 3 à 8, caractérisé en ce que l'élément de moule inférieur (20) ou l'élément de moule supérieur (36) comporte une collerette (24) délimitant l'espace de moulage creux sur trois côtés et l'axe de liaison des éléments de moule (28) est prévu sur le quatrième côté de l'espace de moulage creux.

10. Appareillage selon l'une des revendications 3 à 9, caractérisé en ce que l'élément de moule inférieur (20) et / ou l'élément de moule supérieur (36) comportent un dispositif de chauffage, c'est-à-dire de ramollissement (94) et / ou un dispositif de refroidissement (96).

11. Appareillage selon l'une des revendications précédentes, caractérisé en ce que l'orifice d'admission (76) est prévu à l'emplacement le plus étroit de l'espace de prémoulage creux en forme de coin (86) dans l'état d'injection.

12. Appareillage selon l'une des revendications précédentes, caractérisé en ce qu'un, deux ou plusieurs orifices d'admission (76) sont prévus le long de l'axe de liaison des éléments de moule.

13. Appareillage selon l'une quelconque des revendications précédentes, caractérisé en ce que, le long de l'axe de liaison des éléments de moule est prévu un système de canaux chauffés, à travers lesquels la matière thermoplastique est injectée en plusieurs emplacements de l'espace de moulage creux en forme de coin.
